# EUROPÄISCHE PATENTANMELDUNG

(11) **EP 4 106 302 A1**
(43) Veröffentlichungstag der Anmeldung: **21.12.2022**
(21) Anmeldenummer: 21179864.0
(22) Anmeldetag: 16.06.2021
(51) Int. Cl.: H04M 1/247, H04M 1/677

(54) **KINDERTELEFON**

(71) Anmelder: Trautmann, Nils, 73431 Aalen (DE); Trautmann, Anika, 73431 Aalen (DE)
(72) Erfinder: Trautmann, Nils, 73431 Aalen (DE); Trautmann, Anika, 73431 Aalen (DE)
(74) Vertreter: Witte, Weller und Partner Patentanwälte mbB Stuttgart

(57) **Zusammenfassung**

Es wird ein Kindertelefon vorgeschlagen, welches einen Lautsprecher (12) und ein Mikrofon (14) aufweist sowie mit einer Steuer- und Kommunikationseinrichtung (16, 18) versehen ist, die zur Anbindung an ein externes Netzwerk (100) ausgebildet ist.

Das Kindertelefon weist eine Einrichtung (30) zur Gesprächspartnerwahl auf. Diese umfasst einen Aufnahmebereich (32) zur Platzierung einer Gesprächspartner-Figur (40) oder eines Gesprächspartner-Tokens. Diese Gesprächspartner-Figur (40) bzw. dieser Gesprächspartner-Token ist mit einem maschinell auslesbaren Kennzeichen (44) versehen, welches einem Gesprächspartner eindeutig zugeordnet ist. Der Aufnahmebereich (32) weist eine Leseeinrichtung (34) auf, mittels derer das Kennzeichen (44) auslesbar ist, so dass die Steuer- und Kommunikationseinrichtung (16, 18) in Reaktion auf das Auslesen des Kennzeichens (44) eine Sprachverbindung über das externe Netzwerk (100) aufbauen kann.

## Beschreibung

### ANWENDUNGSGEBIET UND STAND DER TECHNIK

Die Erfindung betrifft ein Kindertelefon. Ein Kindertelefon im Sinne der Erfindung ist ein für reale Telefonate geeignetes Telefon, welches in besonderer Weise an die Fähigkeiten von Kindern angepasst ist, wobei die Erfindung insbesondere ein Kindertelefon betrifft, welches an die Fähigkeiten von Kinder im Alter von 8 Jahren und weniger angepasst ist.

Aus dem Stand der Technik sind eine Vielzahl von Telefonen für Kinder bekannt. Insbesondere sind Kindertelefone bekannt, die auf üblichen Betriebssystemen wie bspw. Android aufbauen und eine an Kinder angepasst Bedienoberfläche zur Verfügung stellen.

Nachteilig hieran ist, dass solche Geräte häufig empfindlich sind und daher beim Spielen schnell beschädigt werden können. Auch ist die Bedienung für kleiner Kinder häufig schwierig. Vor allen Dingen jedoch ist es pädagogisch wünschenswert, dass Kinder nicht bereits in jungem Alter ein Gerät mit Bildschirm zur Verfügung gestellt bekommen.

### AUFGABE UND LÖSUNG

Aufgabe der Erfindung ist es daher, ein Kindertelefon zur Verfügung zu stellen, welches in pädagogisch unbedenklicher Weise auch von kleinen Kindern genutzt werden kann.

Erfindungsgemäß wird hierzu ein Kindertelefon vorgeschlagen, welches über einen Lautsprecher und ein Mikrofon verfügt sowie einen Steuer- und Kommunikationseinrichtung aufweist, die zur Anbindung an ein externes Netzwerk ausgebildet ist. Der Lautsprecher und das Mikrofon können an einem Hörer vorgesehen sein. Vorzugsweise handelt es sich jedoch um eine Freisprecheinrichtung, bei der der Lautsprecher und das Mikrofon an einem im Betrieb unbewegten Gehäuse des Kindertelefons vorgesehen sind.

Das Kindertelefon kann als analoges Telefon ausgebildet sein. Vorzugsweise jedoch ist die Steuer- und Kommunikationseinrichtung dafür ausgebildet, mit einem lokalen IP-Netzwerk oder dem Internet verbunden zu werden, insbesondere durch ein WLAN-Modul der Steuer- und Kommunikationseinrichtung. Eine weitere mögliche Gestaltung sieht vor, dass die Steuer- und Kommunikationseinrichtung zur Mobilfunk-Kommunikation ausgebildet ist, insbesondere nach dem GSM-Standard, dem 3G-, 4G- oder 5G-Standard.

Das Kindertelefon kann insbesondere dafür ausgebildet sein, Telefonate mit Gesprächspartnern zu führen, die ein Kindertelefon gleicher Art nutzen. Es ist jedoch vorzugsweise ebenso möglich, dass ein erfindungsgemäßes Kindertelefon auch Gespräche mit Gesprächspartnern mit anderen Endgeräten gestattet, insbesondere bei Verwendung des normalen Telefonnetzes mit Gesprächspartnern mit üblichem Telefon oder mit Gesprächspartnern, die eine hierfür spezifisch vorgesehene App auf einem Mobiltelefon verwenden.

Das Kindertelefon verfügt über eine Einrichtung zur Gesprächspartnerwahl, wobei diese abweichend von üblichen Telefonen nicht mit Wähltasten zur Kontaktaufnahme mit beliebig wählbaren Gesprächspartnern ausgebildet ist. Stattdessen weist die Einrichtungzur Gesprächspartnerwahl einen Aufnahmebereich auf, insbesondere an einer Oberseite des Gehäuses.

Dieser Aufnahmebereich ist zur Platzierung einer Gesprächspartner-Figur oder eines Gesprächspartner-Tokens vorgesehen. Der Aufnahmebereich ist vorzugsweise mit einer ebenen Fläche ausgebildet, auf der die Figur oder der Token frei platziert werden kann. Der Aufnahmebereich kann jedoch beispielsweise durch seine Formgebung eine genaue Positionierung einer Figur oder eines Tokens begünstigen und der Figur oder dem Token Halt geben, so dass die Platzierung für ein Kind einfacher wird. Eine magnetische Gestaltung des Aufnahmebereichs und/oder der Figur führt zu einer zusätzlichen Sicherung und zu einer Erleichterung insbesondere für kleine Kinder.

Die Gesprächspartner-Figur bzw. der Gesprächspartner-Token wird auf diesem Aufnahmebereich platziert, also dort abgelegt oder aufgestellt. Die Figur bzw. der Token ist mit einem maschinell auslesbaren Kennzeichen versehen, beispielsweise in Form eines RFID-Tags, eines Barcodes oder eines QR-Codes. Der Aufnahmebereich, auf dem die Figur platziert ist, weist eine korrespondierende Leseeinrichtung auf, die in der Lage ist, das Kennzeichen auszulesen. Diese Leseeinrichtung kann beispielsweise als RFID-Leser ausgestaltet sein oder als Kamera oder anderweitige optische Erfassungseinrichtung.

Die mit der Leseeinrichtung verbundene Steuer- und Kommunikationseinrichtung ist dafür ausgebildet, den Gesprächspartner anhand des über die Leseeinrichtung erfassten Kennzeichens zu ermitteln und unmittelbar oder nach Betätigung einer im Weiteren noch beschriebenen Taste eine Sprachverbindung zu diesem Gesprächspartner über das externe Netzwerk aufzubauen.

Bei einem erfindungsgemäßen Kindertelefon liegt die primäre Besonderheitsomit insbesondere darin, dass das Kind durch Handhabung einer Figur oder eines anders gearteten Tokens in der Lage ist, eine Sprachverbindung aufzubauen. Das Kind muss hierfür nur den Zusammenhang zwischen der Platzierung der Figur oder des Tokens und dem Gesprächsaufbau verstehen. Dies kann Kindern bereits im Alter von 3 Jahren gelingen.

Die Figur kann eine menschenähnliche Figur sein, deren Form einen Torso, einen Kopf und Arme sowie vorzugsweise auch Beine umfasst. Die Größe einer solche Figur kann üblichen Spielzeugfiguren entsprechen, wie sie beispielsweise unter den Markennamen Playmobil oder Lego erhältlich sind. Über die Formgebung dieser Figur oder besondere Kennzeichen wie Haarfarbe, Brille und Körperbau können unterschiedliche Figuren für ein Kind unterscheidbar sein. Eine solche menschenähnliche Figur weist vorzugsweise einen Standfuss auf, in dem oder an dem das maschinell auslesbare Kennzeichen vorgesehen ist und derdurch seine Masse der Figur einen sicheren Stand verleiht.

Gegenüber der menschenähnlichen Figur bevorzugt ist jedoch eine Art von Gesprächspartner-Figur, die auch unabhängig vom beschriebenen Kindertelefon als Teil der Erfindung angesehen wird. Eine solche Figur weist ebenfalls eines Standfuss auf, der mit dem maschinell auslesbaren Kennzeichen versehen ist. Eine solche Figur weist jedoch zusätzlich eine Aufnahme für eine Abbildung des Gesprächspartners auf, der dem Kennzeichen im Standfuss eindeutig zugeordnet ist. In diese Aufnahme kann ein Bild dieses Gesprächspartners oder von dessen Gesicht eingefügt werden.

Eine solche Figur mit einer Aufnahme für ein Bild kann mit geringem Aufwand durch Einschieben eines Fotos angepasst werden. Die Aufnahme ist vorzugsweise auf mindestens einer Seite durch eine transparente Wandung begrenzt. Um einen 3D-Effekt zu erzielen, kann zusätzlich vorgesehen sein, dass diese Wandung mit einem Prismenrasterversehen ist. Dies wird als Lentikulardruck bezeichnet.

Wenngleich der Hauptzweck des Kindertelefons im Aufbau einer Sprachverbindung zu einem Gesprächspartner liegt, kann die Leseeinrichtung auch dafür ausgebildet sein, mehrere Figuren oder Token zu erfassen, die gleichzeitig auf dem Aufnahmebereich platziert sind. Dies gestattet es insbesondere, mehrere Gesprächspartner zu wählen und mit diesen gleichzeitig ein Gespräch zu führen.

Die Steuer- und Kommunikationseinrichtung kann im einfachsten Falle derart ausgebildet sein, dass bis auf den Aufnahmebereich keine weiteren Bedienelemente für den Gesprächsaufbau erforderlich sind. Der Gesprächsaufbau erfolgt dabei alleine in Reaktion auf die Platzierung der Figur oder des Tokens auf dem Aufnahmebereich. Das Gespräch wird bei einer bevorzugten Gestaltung beendet, sobald die Figur oder der Token vom Aufnahmebereich entfernt wird oder wenn der Gesprächspartner das Gespräch beendet.

Es kann jedoch von Vorteil sein, wenn zumindest eine Gesprächstaste als zusätzliches Bedienelement vorgesehen ist. Diese Gesprächstaste ist vorzugsweise kindgerecht ausgebildet, indem sie vorzugsweise eine recht große Fläche von mindestens 6 cm², insbesondere vorzugsweise von mindestens 10 cm², einnimmt. Sie kann insbesondere in Form von menschlichen Lippen oder eines Mundes gestaltet sind, vorzugsweise mit freundlich nach oben weisenden Mundwinkeln. Alternativ können Lippen oder ein menschlicher Mund auch per Aufdruck auf der Gesprächstaste vorgesehen sein.

Diese Gesprächstaste oder gegebenenfalls auch mehrere Gesprächstasten kann bzw. können insbesondere zwei Zwecke erfüllen. Sie kann dafür vorgesehen sein, den Gesprächsaufbau einzuleiten, nachdem zuvor eine Gesprächspartner-Figur auf dem Aufnahmebereich platziert wurde. Der hierdurch vorgesehene Gesprächsaufbau, der nicht unmittelbar durch Platzierung der Gesprächspartner-Figur ausgelöst wird, verhindert versehentliche Telefonate und ist für das Kind etwas herausfordernder, da es die Platzierung der Figur als vorbereitende Maßnahme und die anschließende Betätigung der Gesprächstaste benötigt.

Eine weitere Funktion, die mittels der Gesprächstaste oder gegebenenfalls auch einer anderen Taste ausgelöst werden kann, ist die Beendigung einer bestehenden Sprachverbindung. In einem solchen Falle kann die Gesprächspartner-Figur also nach Aufbau des Gesprächs entfernt werden, ohne dass die Sprachverbindung unterbrochen wird.

Eine dritte Funktion der Gesprächstaste kann die Annahme eines eingehenden Anrufs sein. Geht ein Anruf ein, so wird dieservorzugweise über den Lautsprechersignalisiert und das Kind kann über eine Taste wie die Gesprächstaste den Anruf annehmen und die Sprachverbindung aufbauen.

Das Kindertelefon kann für die Entgegennahme eingehender Anrufe zusätzlich auch eine Anrufbeantworterfunktion aufweisen, wobei der Speicher zur Aufnahme von Sprachnachrichten nicht zwingend lokal im Kindertelefon vorgesehen sein muss. Es ist allerdings von Vorteil, wenn ein Kindertelefon mit Anrufbeantworterfunktion ein Signalisierungsmittel wie eine Lampe aufweist, um auf das Vorhandensein eingegangener Sprachnachrichten hinzuweisen. Auch eine zusätzliche Taste zum Abspielen solcher Nachrichten kann zweckmäßig sein. Es ist aber auch möglich, die schon beschriebene Gesprächstaste hierfür zu nutzen.

Weiterhin kann es auch sinnvoll sein, das Kindertelefon mit weiteren Tasten zu versehen, wobei bevorzugt ist, dass das Kindertelefon möglichst nur wenige Tasten aufweist. Dennoch können insbesondere Lautstärketasten zweckmäßig sein. Auch diese sind vorzugweise kindgerecht ausgebildet und weisen vorzugsweise jeweils eine Fläche von mindestens 3 cm² auf, insbesondere von mindestens 5 cm². Um die Funktion auch für Kinder möglichst verständlich zu machen, sind die Lautstärketasten vorzugweise in Form von Ohren oder telefonmuschelförmig gestaltet oder sie weisen einen entsprechenden Aufdruck auf.

Das bereits genannte Gehäuse des Kindertelefons weist vorzugsweise eine für Kinder attraktive Gestaltung auf. Insbesondere kann das Kindertelefon als dominierende Außenfarbe gelb, grün, rot oder blau gestaltet sein oder mehrere dieser Farben als prägende Gehäusefarben aufweisen. Der bereits beschriebene Aufnahmebereich ist vorzugweise an einer Gehäuseoberseite vorgesehen und insbesondere vorzugsweise farblich abgesetzt, um seine besondere Funktion zu verdeutlichen. Vorzugsweise ist der Aufnahmebereich etwas vertieft, um dort platzierten Figuren oder Token verbesserten Halt zu gewähren.

Weiterhin ist es zur Verminderung einer Verletzungsgefahr sinnvoll, wenn das Gehäuse keine scharfkantigen Ecken aufweist, sondern stattdessen in Katenbereichen abgerundet ist. Insbesondere vorzugsweise kann das Gehäuse auch zumindest abschnittsweise einen textilen Bezug aufweisen und/oder mit einer Dämpfungsschicht versehen sein, beispielsweise aus einem Elastomer oder aus Schaumstoff.

Das beschriebene Kindertelefon kann derart ausgestaltet sein, dass es eigenständig als Telefon verwendbar ist und keine besonders angepasste externe Infrastruktur wie einen Verwaltungsserver benötigt. In einem solchen Falle wird das Kindertelefon mit dem Mobilfunknetz, mit dem klassischen Telefonnetz oder mit einem üblichen Voice-over-IP-Server verbunden.

Es ist jedoch auch in diesem Falle gewünscht, dass besondere Möglichkeiten zur Administration des Kindertelefons durch die Eltern bestehen. Insbesondere können diese in einer Konfigurationsoberfläche bestehen, die durch einen Webserver auf dem Kindertelefon bereitgestellt wird.

Die Konfigurationsoberfläche ist vorzugsweise dafür ausgebildet, Figuren oder Token zu registrieren. Dies bedeutet, dass die Eltern des Kindes die eindeutige Kennung einer Figur oder eines Tokens mit dem Gesprächspartner verknüpfen können, insbesondere mit dessen Telefonnummer. Wird die Figur oder der Token dann auf dem Aufnahmebereich platziert, so kann die hinterlegte Rufnummer ermittelt und angerufen werden.

Die Konfigurationsoberfläche kann weiterhin dafür ausgebildet sein, festzulegen, ob und welche eingehenden Anrufe am Kindertelefon entgegengenommen werden können. So kann insbesondere eine Liste von Rufnummern festgelegt werden, über die das Kindertelefon erreichbar ist, während alle anderen Rufnummern geblockt werden.

Darüber hinaus können auch Einstellungen zur Nutzungszeit des Kindertelefons über die Konfigurationsoberfläche erfolgen. Die Eltern können somit festlegen, wie lange und zu welchen Uhrzeiten das Kindertelefon täglich oder wöchentlich benutzt werden darf oder wie lange Telefonate über das Kindertelefon dauern dürfen. Dies kann auch differenziert nach Gesprächspartner erfolgen.

Wie bereits geschrieben, kann die Konfigurationsoberfläche über einen auf dem Kindertelefon selbst laufenden Webserver bereitgestellt werden. Auch eine App auf einem Smartphone der Eltern, die beispielsweise über Bluetooth oder WLAN mit dem Kindertelefon kommuniziert, kann als Konfigurationswerkzeug verwendet werden.

Als vorteilhaft wird es jedoch angesehen, wenn das das Kindertelefon in ein System eingebunden ist, in dem auch mindestens ein externer Server vorhanden ist, der mit einer Vielzahl von Kindertelefonen der beschriebenen Art über das Internet in Verbindung steht und eine zentrale Verwaltungssoftware für die Kindertelefone bereitstellt. Dieser externe Server kann in einem solchen Falle auch die beschriebene Konfigurationsoberfläche bereitstellen.

Ein solcher Server kann neben der Administration des Kindertelefons weitere Funktionen bereitstellen. Hierzu gehören insbesondere Audio-Spiele, die das Kind über das Kindertelefon spielen kann. Solche Audio-Spiele können beispielsweise Frage-Antwort-Spiele sein, bei denen das Kind eine Frage gestellt bekommt und hierauf eine Antwort gibt. Diese Antwort wird auf eine Spracherkennung folgend serverseitig oder lokal ausgewertet und das Kind erhält eine Rückmeldung. Solche Frage-Antwort-Spiele können auch integriert sein in Hörbüchern, die das Kind über das Kindertelefon abspielen kann.

Die Auswahl eines solchen Audio-Spiels oder auch von Hörbüchern, die solche Audio-Spiele umfassen, erfolgt vorzugsweise ebenfalls durch eine Figur oder einen Token mit einer eindeutigen Kennung, die von der Leseeinrichtung am Aufnahmebereich des Kindertelefons erfasst wird. Entsprechende Figuren oder Tokens können zu einem bestehenden Kindertelefon hinzugekauft werden.

Vorzugsweise sind derartige Audio-Spiele auch durch mehrere Kinder mit mehreren Kindertelefonen gemeinsam spielbar. Dies wird insbesondere dadurch ermöglicht, dass der Aufnahmebereich zur gleichzeitigen Aufnahme einer Gesprächspartner-Figur bzw. eines Gesprächspartner-Tokens sowie einer Audio-Spiel-Figur bzw. eines Audio-Spiel-Tokens ausgebildet ist.

Das beschriebene Gerät ist in der erläuterten Weise vorzugsweise für die Verwendung von Kindern vorgesehen, die aufgrund der einfachen Bedienung schon in jungem Alter hierdurch in der Lage sind, Telefongespräche mit Freunden oder Verwandten führen zu können.

Grundsätzlich kann ein erfindungsgemäßes Telefon jedoch auch als Seniorentelefon ausgestaltet sein. So ist es beispielsweise für an Demenz leidende Senioren eine große Hilfe, den Gesprächspartner für die entsprechende Figur, insbesondere mit einem Foto des Gesprächspartners, identifizieren zu können und alleine durch Platzieren der Figur auf dem Aufnahmebereich ein Gespräch initiieren zu können.

### KURZBESCHREIBUNG DER ZEICHNUNGEN

Fig. 1 zeigt ein erfindungsgemäßes Kindertelefon mitsamt einer Figur zur Gesprächspartnerwahl.
Fig. 2A und 2B zeigen die Figur zur Gesprächspartnerwahl von unten in zwei Varianten.
Fig. 3 zeigt ein Gesamtsystem, umfassend das Kindertelefon und dessen Anbindung an das Internet sowie dessen Kommunikation mit einem externen Server.

### DETAILLIERTE BESCHREIBUNG DER AUSFÜHRUNGSBEISPIELE

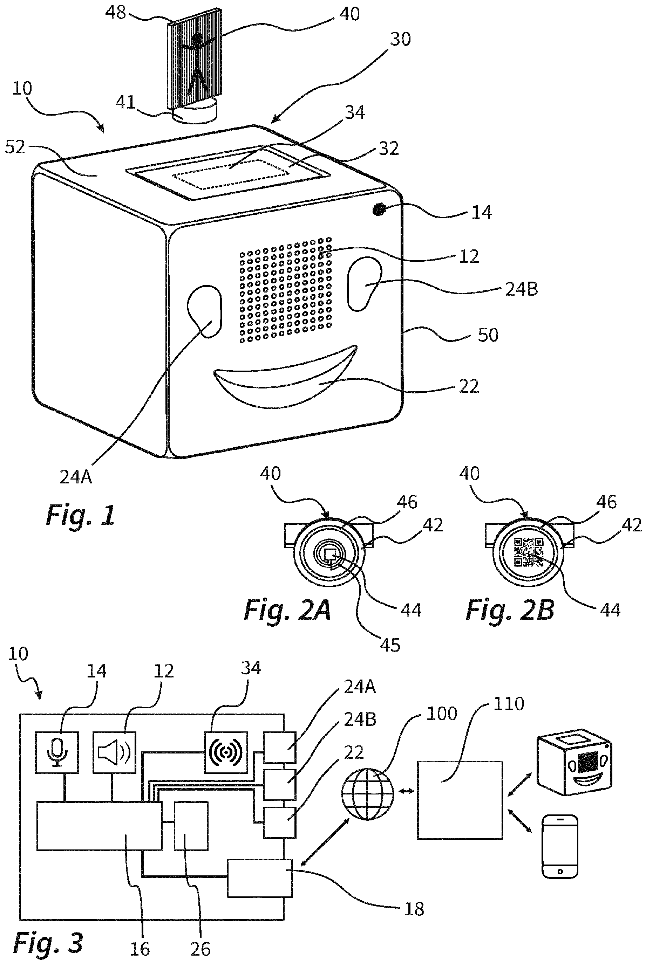

Fig. 1 zeigt ein erfindungsgemäßes Kindertelefon 10. In Fig. 3 ist dieses Kindertelefon 10 nochmals in schematischer Hinsicht im Hinblick auf seine elektronischen Komponenten dargestellt.

Das Kindertelefon 10 verfügt über ein im vorliegenden Fall etwa würfelförmiges Gehäuse 50. An einer Vorderseite sind ein Lautsprecher 12 sowie ein Mikrofon 14 vorgesehen. Weiterhin weist das Kindertelefon an der Vorderseite insgesamt drei Tasten auf, nämlich eine Gesprächstaste 22 sowie zwei Lautstärketasten 24A, 24B. Die Gesprächstaste 22 ist in Form eines lächelnden Mundes gestaltet. Die Lautstärketasten 24A, 24B sind in Form zweier Ohren gestaltet. Alle Tasten sind vergleichsweise groß, um von einem Kind unproblematisch bedient zu werden.

An der Oberseite 52 des Gehäuses 50 ist ein vorliegend leicht vertiefter Aufnahmebereich 32 vorgesehen, dem eine Leseeinrichtung 34 zugeordnet ist, insbesondere eine Leseeinrichtung zum Lesen von RFDI-Tags.

Bezugnehmend auf Fig. 3 ist zusätzlich zu erkennen, dass das Kindertelefon 10 über einen Zentralprozessor 16 verfügt, dem ein elektronischer Speicher 26 zugeordnet ist. Der Zentralprozessor 16 ist darüber hinaus mit dem Lautsprecher 12, dem Mikrofon 14 und der Leseeinrichtung 34 verbunden. Weiterhin sind die besagten Tasten 22, 24A, 24B mit dem Prozessor 16 verbunden.

Zur Kommunikation mit anderen Geräten weist das Kindertelefon 10 eine Kommunikationseinrichtung 18 auf, die vorliegend beispielsweise in Form eines WLAN-Moduls mit entsprechender Antenne gestaltet sein kann. Über die Kommunikationseinrichtung 18 ist das Kindertelefon 10 mit dem Internet 100 und einem im Internet befindlichen Zentralserver 110 verbunden.

Das erfindungsgemäße Kindertelefon 10 gestattet es Kindern, Gespräche mit anderen Personen zu führen, beispielsweise mit Freunden oder Verwandten. Zum Zwecke der Wahl eines Gesprächspartners ist der schon beschriebene Aufnahmebereich 32 mit der Leseeinrichtung 34 vorgesehen. Dieser Aufnahmebereich 32 ist dafür vorgesehen, eine Gesprächspartnerfigur 40 aufzunehmen, wie sie in Fig. 1 dargestellt ist. Die dortige Gesprächspartnerfigur weist einen Standfuss 41 auf, der in den Fig. 2A und 2B in zwei Varianten von unten dargestellt ist. Dieser Standfuss 41 verfügt vorzugsweise über einen Magneten 46, mittelsdessen ergegen Erschütterungen gesichert auf dem partiell metallischen Aufnahmebereich 32 platziert werden kann. Das Vorhandensein von Magneten ist jedoch nicht zwingend erforderlich, da auf den Aufnahmebereich 32 aufgesetzte Figuren auch aufgrund der Schwerkraft und der vertieften Gestaltung des Aufnahmebereichs 32 üblicherweise ausreichend sicher fixiert sind. Am Standfuss 41 ist eine Aufnahme 48 aus transparentem Kunststoff befestigt, in die ein Foto eines Gesprächspartners eingefügt werden kann. Vorzugsweise ist die transparente Wandung der Aufnahme mit einem Prismenraster versehen, so dass bei entsprechend vorbereitetem eingeschobenem Bild ein 3D-Eindruck erzeugt wird.

An der Unterseite des Standfusses 41 ist dieser mit einer Kontaktfläche 42 versehen, die bestimmungsgemäß auf dem Aufnahmebereich 32 platziert wird. Weiterhin weist der Standfuss 41 ein eindeutiges Kennzeichen auf, beispielsweise eine Identifikationsnummer, die beim Beispiel der Fig. 2A in Form eines RFID-Tags mit Antenne 45 ausgestaltet ist. Im Falle der Gestaltung der Fig. 2B ist das eindeutige Kennzeichen in einen QR-Code eincodiert.

Bestimmungsgemäß wählt das Kind eine solche Figur 40, von der es üblicherweise eine Mehrzahl hat (beispielsweise für Freunde, Mutter, Vater, Großeltern), und platziert diese Figur 40 auf dem Aufnahmebereich 32. Die Leseeinrichtung 34 ist dann in der Lage, das Kennzeichen auszulesen und anhand des Kennzeichens die für den Gesprächsaufbau mit der betreffenden Person erforderlichen Daten bereitzustellen, beispielsweise indem diese vom Zentralserver 110 abgefragt werden. Das Kindertelefon 10 kann dann unmittelbar die Sprachverbindung aufbauen. Alternativ kann aber auch vorgesehen sein, dass durch ein bestimmtes Geräusch, welches über den Lautsprecher 12 abgegeben wird, dem Kind signalisiert wird, dass das Kennzeichen der Figur 40 ausgelesen werden konnte und ein Gesprächsaufbau nun möglich ist. Das Kind kann dann über Druck auf die Gesprächstaste 22 das Gespräch starten.

DerGesprächsaufbau erfolgt vorzugsweise über das normale Telefonnetz. Es wird also eine Rufnummer gewählt, die dem Kennzeichen 44 der Person zugeordnet ist oder die unmittelbar das Kennzeichen 44 der Figur 40 bildet.

Soll das laufende Gespräch beendet werden, so kann dies im einfachsten Falle dadurch erzielt werden, dass die Figur 40 wieder aus dem Aufnahmebereich 32 entfernt wird. Alternativ kann auch vorgesehen sein, dass beispielsweise ein Tastendruck auf die Gesprächstaste 22 das Gespräch beendet.

Das Kind kann nur Sprachverbindungen aufbauen mit Personen, zu denen eine entsprechende Figur 40 vorhanden ist. Soll dem Kind die Möglichkeit gegeben werden, einen weiteren Gesprächspartner anzurufen, so wird eine weitere Figur 40 benötigt. Diese wird dann bestimmungsgemäß von den Eltern mit einer Fotografie des Gesprächspartners versehen und es wird entweder auf dem Kindertelefon 10 oder auf dem externen Server 110 die entsprechende Figur mitsamt der Rufnummer des Gesprächspartners hinterlegt.

Über eine nicht dargestellte Benutzeroberfläche können die Eltern des Kinds darüber hinaus auch steuern, ob und von wem das Kindertelefon selbst angerufen werden kann. Auch ist es möglich, dass die Eltern weitere Parameter hinsichtlich der Verwendung des Kindertelefons 10 steuern, beispielsweise die maximale Gesprächsdauer pro Tag.

Der Aufnahmebereich 32 ist in der in Fig. 1 dargestellten Weise relativ groß gestaltet, nämlich so groß, dass er mehrere Figuren aufnehmen kann. Dies gestattet es dem Kind, mehrere Gesprächspartner, beispielsweise mehrere Freunde, gleichzeitig anzurufen. Auch möglich ist es, noch Figuren oder anderweitige Tokens vorzusehen, die nicht stellvertretend für einen Gesprächspartner stehen, sondern für ein Audio-Spiel, welches das Kind dadurch gemeinsam mit einem Freund spielen kann, dass sowohl die Figur 40 des Freundes als auch eine weitere Figur oder ein weiterer Token, der für das Audio-Spiel steht, im Aufnahmebereich platziert wird.

## Patentansprüche

1. Kindertelefon (10) mit den folgenden Merkmalen:
a. das Kindertelefon (10) weist einen Lautsprecher (12) und ein Mikrofon (14) auf, und
b. das Kindertelefon (10) weist eine Steuer- und Kommunikationseinrichtung (16, 18) auf, die zur Anbindung an ein externes Netzwerk (100) ausgebildet ist, und
c. das Kindertelefon (10) weist eine Einrichtung (30) zur Gesprächspartnerwahl auf, und
d. die Einrichtung (30) zur Gesprächspartnerwahl umfasst einen Aufnahmebereich (32) zur Platzierung einer Gesprächspartner-Figur (40) oder eines Gesprächspartner-Tokens, und
e. die Einrichtung (30) zur Gesprächspartnerwahl umfasst mindestens eine Gesprächspartner-Figur (40) oder einen Gesprächspartner-Token, wobei die Gesprächspartner-Figur (40) oderderGesprächspartner-Token mit einem maschinell auslesbaren Kennzeichen (44) versehen ist, welches einem Gesprächspartner eindeutig zugeordnet ist, und
f. der Aufnahmebereich (32) weist eine Leseeinrichtung (34) auf, mittels derer das Kennzeichen (44) der auf ihm platzierten Gesprächspartner-Figur (40) oder des auf ihr platzierten Gesprächspartner-Tokens auslesbar ist, und
g. die Steuer- und Kommunikationseinrichtung (16,18) ist dafür ausgebildet, in Reaktion auf das Auslesen des Kennzeichens (44) durch die Leseeinrichtung (34) eine Sprachverbindung über das externe Netzwerk (100) aufzubauen.

2. Kindertelefon (10) nach Anspruch 1 mit den folgenden weiteren Merkmalen:
a. der Aufnahmebereich (32) ist zur gleichzeitigen Aufnahme mehrerer Figuren (40) oder Token ausgebildet, und
b. die Leseeinrichtung (34) ist dafür ausgebildet, Kennzeichen von mehreren gleichzeitig auf dem Aufnahmebereich (32) platzierten Figuren (40) einzulesen.

3. Kindertelefon (10) nach Anspruch 1 oder 2 mit den folgenden weiteren Merkmalen:
a. das Kindertelefon (10) weist ein Gehäuse (50) auf, welches über eine Gehäuseoberseite (52) verfügt, und
b. der Aufnahmebereich (32) zur Platzierung der Gesprächspartner-Figur (40) oder des Gesprächspartner-Tokens ist an dieser Gehäuseoberseite (52) vorgesehen.

4. Kindertelefon (10) nach einem der vorstehenden Ansprüche mit dem folgenden weiteren Merkmal:
a. der Aufnahmebereich (32) oder eine Kontaktfläche (42) der Figur (40) oder des Tokens ist mit einem Magneten (46) versehen.

5. Kindertelefon (10) nach einem der vorstehenden Ansprüche mit mindestens einem der folgenden zusätzlichen Merkmale:
a. die Steuer- und Kommunikationseinrichtung (16, 18) ist zum Anschluss an ein externes Ethernet-Netzwerk und/oder zur Anbindung an ein drahtloses WLAN-Netzwerk ausgebildet, und/oder
b. die Steuer- und Kommunikationseinrichtung (16, 18) ist zum Anschluss an einen analogen Telefonanschluss ausgebildet, und/oder
c. die Steuer- und Kommunikationseinrichtung (16, 18) ist zur drahtlosen Anbindung an ein Mobilfunknetz ausgebildet, insbesondere gemäß GSM-Standard oder gemäß 3G-, 4G- oder 5G-Standard.

6. Kindertelefon (10) nach einem der vorstehenden Ansprüche mit dem folgenden weiteren Merkmal:
a. die Steuer- und Kommunikationseinrichtung (16, 18) ist dafür ausgebildet, die Sprachverbindung zu unterbrechen, wenn die Gesprächspartner-Figur (40) oder der Gesprächspartner-Token vom Aufnahmebereich (32) entfernt wird.

7. Kindertelefon (10) nach einem der vorstehenden Ansprüche mit dem folgenden weiteren Merkmal:
a. das Kindertelefon (10) weist eine Gesprächstaste (22) auf, mittels derer eine Sprachverbindung aufgebaut und/oder eine bestehende Sprachverbindung beendet werden kann,
vorzugsweise mit mindestens einem der folgenden zusätzlichen Merkmale:
b. die Gesprächstaste (22) hat eine Größe von mindestens 6 cm², vorzugsweise von mindestens 10 cm², und/oder
c. die Gesprächstaste (22) weist eine Formgebung entsprechend menschlicher Lippen auf oder ist mit einem Bild menschlicher Lippen versehen.

8. Kindertelefon (10) nach einem der vorstehenden Ansprüche mit dem folgenden weiteren Merkmal:
a. das Kindertelefon (10) weist mindestens eine Lautstärketaste (24A, 24B) auf, mittels derer die Lautstärke des Lautsprechers (12) eingestellt werden kann,
vorzugsweise mit mindestens einem der folgenden zusätzlichen Merkmale:
b. die mindestens eine Lautstärketaste (24A, 24B) hat eine Größe von mindestens 3 cm², vorzugsweise von mindestens 5 cm², und/oder
c. die Lautstärketaste (24A, 24B) weist eine Formgebung entsprechend einem menschlichen Ohr auf oder ist mit einem Bild eines menschlichen Ohres versehen.

9. Kindertelefon (10) nach einem der vorstehenden Ansprüche mit mindestens einem der folgenden weiteren Merkmale:
a. das Kennzeichen (44) auf der Figur (40) oder dem Token ist als RFID-Tag ausgebildet, insbesondere als passives RFID-Tag, wobei die Leseeinrichtung (34) als RFID-Leser ausgebildet ist, oder
b. das Kennzeichen auf der Figur (40) oder dem Token ist als visuell erfassbarer Code ausgebildet, insbesondere als Barcode oder als QR-Code, wobei die Leseeinrichtung (34) als Kamera ausgebildet ist.

10. Kindertelefon (10) nach einem der vorstehenden Ansprüche mit mindestens einem der folgenden weiteren Merkmale:
a. das Gehäuse (50) weist eine Außenfläche auf, die gelb, grün, rot oder blau ist oder mehrere dieser Farben umfasst, und/oder
b. das Gehäuse (50) weist einen textilen Bezug auf, und/oder
c. das Gehäuse (50) ist mit einer Dämpfungsschicht versehen, insbesondere aus Schaumstoff.

11. Kindertelefon (10) nach einem der vorstehenden Ansprüche mit einem der folgenden weiteren Merkmale:
a. die Steuer- und Kommunikationseinrichtung (16, 18) ist dafür ausgebildet, unmittelbar in Reaktion auf die Platzierung einer Figur (40) oder eines Tokens auf dem Aufnahmebereich (32) die Sprachverbindung mit dem der Figur (40) oder dem Token zugeordneten Gesprächspartner aufzubauen, oder
b. die Steuer- und Kommunikationseinrichtung (16, 18) ist dafür ausgebildet, in Reaktion auf eine Tastenbetätigung, insbesondere der Gesprächstaste (22), eine Sprachverbindung mit dem Gesprächspartner aufzubauen, dessen Figur (40) oder Token auf dem Aufnahmebereich (32) platziert ist.

12. Kindertelefon (10) nach einem der vorstehenden Ansprüche mit dem folgenden weiteren Merkmal:
a. das Kindertelefon (10) ist dafür ausgebildet, eingehende Anrufe entgegennehmen zu können,
vorzugsweise mit mindestens einem derfolgenden zusätzlichen Merkmale:
b. die Steuer- und Kommunikationseinrichtung (16,18) ist dafür ausgebildet, einen eingehenden Anruf über den Lautsprecher (12) zu signalisieren, und/oder
c. die Steuer- und Kommunikationseinrichtung (16, 18) ist dafür ausgebildet, eine Sprachverbindung aufzubauen, wenn bei einem eingehenden Anruf eine Tastenbetätigung erfolgt, insbesondere eine Betätigung der Gesprächstaste (22), und/oder
d. das Kindertelefon (10) verfügt über einen Speicher (26), in dem Sprachnachrichten abgelegt werden können.

13. System umfassend mindestens ein Kindertelefon (10) nach einem der vorstehenden Ansprüche mit dem folgenden weiteren Merkmale:
a. das System verfügt über eine Konfigurationsoberfläche, mittels derer Erziehungsberechtigte das Kindertelefon konfigurieren können,
insbesondere mit mindestens einem der folgenden zusätzlichen Merkmale:
b. die Konfigurationsoberfläche ist dafür ausgebildet, Figuren (40) oder Tokens zu registrieren und zu de-registrieren, um hierdurch ausgehende Anrufe vom Kindertelefon (10) ermöglichen oder sperren zu können, und/oder
c. die Konfigurationsoberfläche ist dafür ausgebildet, Berechtigungen festzulegen, gemäß derer das Kindertelefon (10) von externen Telefonen angerufen werden kann, und/oder
d. die Konfigurationsoberfläche gestattet es, die maximale Dauer von über das Kindertelefon (10) geführten Telefonaten festlegen zu können.

14. System umfassend mindestens ein Kindertelefon nach einem der vorstehenden Ansprüche mit dem folgenden weiteren Merkmal:
a. das System verfügt über einen Server (110), der mit dem Kindertelefon (10) über das externe Netzwerk (100) verbunden ist,
insbesondere mit mindestens einem der folgenden zusätzlichen Merkmale:
b. über den Server (110) werden interaktive Audio-Spiele zur Verfügung gestellt, im Zuge derer über den Lautsprecher (12) des Kindertelefons (10) Fragen ausgegeben werden und Antworten über das Mikrofon (14) erfasst und an den Server (110) gesendet werden, wobei vorzugsweise eine Figur oder ein Token vorgesehen ist, der zur Auswahl eines damit zugeordneten Audio-Spiels auf dem Aufnahmebereich (32) platzierbar ist und hier von der Leseeinrichtung ausgelesen werden kann, und/oder
c. der Server (110) weist Zuordnungsdaten auf, durch die das Kennzeichen (44) der Figur (40) oder des Tokens mit einer Rufnummer verbunden ist.

15. Figur (40) für ein Kindertelefon (10) nach einem der vorstehenden Ansprüche mit den folgenden Merkmalen:
a. die Figur weist einen Standfuss (41) auf, und
b. die Figur weist am Standfuss ein maschinell auslesbares Kennzeichen (44) auf, und
c. die Figur weist eine Aufnahme für eine Abbildung des Gesprächspartners auf, welcher dem Kennzeichen (44) eindeutig zugeordnet ist,
vorzugsweise mit mindestens einem derfolgenden zusätzlichen Merkmale:
d. die Aufnahme für die Abbildung des Gesprächspartners ist zumindest an einer Seite mit einer transparenten Wandung versehen, wobei vorzugsweise die transparente Wandung mit einem Prismenraster zur Erzeugung eines 3D-Effektes ausgebildet ist, und/oder
e. der Standfuss (41) ist zur magnetischen Anhaftung auf dem Aufnahmebereich (32) des Kindertelefons (10) mit einem Permanentmagneten oder einem magnetisierbaren Metall versehen.
